# EUROPÄISCHE PATENTANMELDUNG

(11) **EP 3 779 797 A1**
(43) Veröffentlichungstag der Anmeldung: **17.02.2021**
(21) Anmeldenummer: 19191708.7
(22) Anmeldetag: 14.08.2019
(51) Int. Cl.: G06N 3/02, G06N 3/04, G06N 3/08

(54) **VERFAHREN ZUR RECHNERGESTÜTZTEN VORAUSSCHAUENDEN INSTANDHALTUNG EINES TECHNISCHEN SYSTEMS**

(71) Anmelder: Siemens Aktiengesellschaft, 80333 München (DE)
(72) Erfinder: Pietsch, Roland, 76889 Dörrenbach (DE)

(57) **Zusammenfassung**

Eine rechnergestützte vorausschauende Instandhaltung eines technischen Systems wird mithilfe eines Autoencoders ermöglicht. Dazu wird eine Vielzahl von sensorisch erfassten Messwerten (MD) des technischen Systems durch eine Recheneinheit (PU) verarbeitet, indem die Messwerte (MD) einer Eingabeschicht eines als Autoencoder ausgebildeten und mit Trainingsdaten trainierten künstlichen neuronalen Netzes (NN) zugeführt werden, das in einer Encodingschicht ermittelte Werte als Ausgangswerte bereitstellt. Es wird dann ermittelt, ob die Ausgangswerte in oder außerhalb einer durch das Training des neuronalen Netzes (NN) bestimmten Klasse (C1) liegen, wobei durch einen Vergleich auf einen möglichen Instandhaltungsbedarf geschlossen wird, wenn die Ausgangswerte außerhalb der bestimmten Klasse (C1) liegen.

## Beschreibung

Die Erfindung betrifft ein Verfahren zur rechnergestützten vorausschauenden Instandhaltung eines technischen Systems, das mit einer Vielzahl von Sensoren zur Erfassung von jeweiligen Messwerten des technischen Systems versehen ist. Die Erfindung betrifft ferner ein Verfahren zum Trainieren eines datengetriebenen Modells.

Vorausschauende Instandhaltung, auch als "Predictive Maintenance" bekannt, wird dazu genutzt, Ausfälle oder Fehler des technischen Systems zu erkennen bevor es zu einem tatsächlichen Fehlerfall kommt. Die Erkennung von möglichen Fehlern basiert auf der Auswertung von Messwerten, die von einer Vielzahl von Sensoren des technischen Systems ermittelt wurden. Derzeit werden die von den Sensoren erfassten Messwerte gespeichert, wobei eine anlagenspezifische Auswertung der Messwerte durch geschultes Personal vorgenommen wird. Da mit zunehmender Anzahl an über das technische System verteilten Sensoren die anfallende Datenmenge immer größer wird, ist dies ohne Detailkenntnis des technischen Systems immer schwerer möglich.

Es gibt daher Ansätze, das Problem der Fehlererkennung mit künstlicher Intelligenz zu lösen. Da künstliche Intelligenzen in Gestalt von trainierten datengetriebenen Modellen mit einer großen Anzahl an Datensätzen, die alle möglichen Betriebszustände des technischen Systems umfassen, trainiert werden müssen, hat sich dieser Ansatz als nicht zielführend herausgestellt, da die Betriebszustände eine Vielzahl an unterschiedlichen Fehlern umfassen, zu denen keine Daten existieren.

Es ist Aufgabe der Erfindung, Verfahren und eine Vorrichtung anzugeben, die die rechnergestützte vorausschauende Instandhaltung eines technischen Systems auf einfachere Weise ermöglichen.

Diese Aufgaben werden durch die in den unabhängigen Ansprüchen angegebenen Verfahren und Vorrichtungen gelöst. Vorteilhafte Ausgestaltungen sind in den abhängigen Ansprüchen angegeben.

Gemäß einem ersten Aspekt der vorliegenden Erfindung wird ein Verfahren zur rechnergestützten vorausschauenden Instandhaltung eines technischen Systems vorgeschlagen. Das technische System ist mit einer Vielzahl von Sensoren zur Erfassung von jeweiligen Messwerten des technischen Systems versehen. Das Verfahren umfasst die Schritte: Empfang jeweiliger Messwerte von der Vielzahl an Sensoren des technischen Systems an einer Schnittstelle; Verarbeiten der Messwerte durch eine Recheneinheit, indem die Messwerte einer Eingabeschicht eines als Autoencoder ausgebildeten und mit Trainingsdaten trainierten künstlichen neuronalen Netzes zugeführt werden, das in einer Encodingschicht ermittelte Werte als Ausgangswerte bereitstellt; und Ermitteln durch die Recheneinheit, ob die Ausgangswerte in oder außerhalb einer durch das Training des neuronalen Netzes der bestimmten Klasse liegen, wobei durch einen Vergleich auf einen möglichen Instandhaltungsbedarf geschlossen wird, wenn die Ausgangswerte außerhalb der bestimmten Klasse liegen.

Das erfindungsgemäße Vorgehen basiert darauf, als künstliche Intelligenz ein Autoencode-Verfahren zu verwenden. So genannte Autoencoder lernen lediglich diejenigen Betriebsfälle des technischen Systems, welche als bestimmungsgemäß gelten. Da Betriebsfälle mit bestimmungsgemäßen Verhalten der technischen Anlage in ausreichender Menge vorhanden sind, ist es möglich, den Autoencoder entsprechend zu trainieren. Fehlerfälle, d.h. solche Betriebsfälle, die kein bestimmungsgemäßes Verhalten darstellen, können für das Trainieren des datengetriebenen Modells hingegen nicht in ausreichender Menge bereitgestellt werden. Der Autoencoder ist jedoch in der Lage, Abweichungen von bestimmungsgemäßen Verhalten zu erkennen. Dadurch wird eine Möglichkeit geschaffen, die rechtzeitig einen Hinweis geben kann, wenn eine Abweichung vom bestimmungsgemäßen Fall vorliegt, dass ein Problem in Zukunft auftreten könnte. Der Hinweis kann z.B. durch die Ausgabe einer Nachricht oder eines visuell und/oder akustisch wahrnehmbaren Signals über eine entsprechende Schnittstelle erfolgen.

Durch die Verwendung eines Autoencoders ist zwar nicht möglich festzustellen, welcher Fehler im laufenden Betrieb des technischen Systems auftritt. Aufgrund der Möglichkeit, Abweichungen von bestimmungsgemäßem Zustand feststellen zu können, wird man durch die Verwendung des Autoencoders in die Lage gesetzt, frühzeitig zu erkennen, dass das technische System auf das eventuelle Vorliegen eines bereits vorliegenden oder sich ankündigenden Fehlers geprüft werden sollte. In Kombination mit der Verwendung bekannter Systemdiagnosen wird man dadurch in die Lage versetzt, Fehler auf einfache Weise prädiktiv festzustellen, und zwar unabhängig von der Komplexität des technischen Systems.

Es ist zweckmäßig, wenn die jeweiligen Messwerte im Betrieb der technischen Anlage in vorgegebenen Abständen von der Schnittstelle empfangen werden. Die Messwerte können von der Vielzahl von Sensoren beispielsweise in vorgegebenen, insbesondere regelmäßigen Abständen erfasst, und der Schnittstelle zur weiteren Auswertung zugeführt werden. In entsprechender Weise werden dann auch das Verarbeiten der Messwerte und das Ermitteln, ob die Ausgangswerte in oder außerhalb der vorbestimmten Klasse liegen, in den vorgegebenen Abständen ausgeführt. Das Verfahren wird somit iterativ ausgeführt.

Eine weitere Ausgestaltung sieht vor, dass das als Autoencoder ausgebildete neuronale Netzwerk eine oder mehrere Encodingschichten umfasst. Bei der Nutzung mehrerer Encodingschichten werden zweckmäßigerweise die Ausgangswerte der Encodingschicht verarbeitet, die mit einer Ausgangsschicht des neuronalen Netzes verkoppelt ist. Im Gegensatz zu herkömmlichen neuronalen Netzen werden nicht die Ausgangswerte der Ausgangsschicht verarbeitet, sondern die in einer Encodingschicht ermittelten Ausgangswerte.

Es ist weiterhin zweckmäßig, wenn die Dimension der Ausgabewerte geringer ist als die Dimension der Vielzahl an Messwerten, die der Eingabeschicht des neuronalen Netzes zugeführt wird. Auf diese Weise kann eine Datenreduktion erzielt werden, wobei die Ausgabewerte für eine spätere Auswertung und/oder als Trainingsdaten für ein weiteres Training des neuronalen Netzes gespeichert werden können. Es ist ausreichend, lediglich die Ausgabewerte an Stelle der tatsächlichen Messwerte zu speichern, da aufgrund der Eigenschaften eines Autoencoders es möglich ist, aus den Ausgabewerten auf die Messwerte zurückzurechnen. Dies liegt in der Eigenschaft des Autoencoders begründet, dass eine Rückkopplung derart besteht, dass die Neuronen der Ausgabeschicht die gleiche Bedeutung haben wie das entsprechende Neuron in der Eingabeschicht.

Es wird gemäß einem zweiten Aspekt ein Computerprogrammprodukt vorgeschlagen, das direkt in den internen Speicher eines digitalen Computers geladen werden kann und Softwarecodeabschnitte umfasst, mit denen die Schritte gemäß den hierin beschriebenen Verfahren ausgeführt werden, wenn das Produkt auf dem Computer läuft. Das Computerprogrammprodukt kann in der Gestalt eines physikalischen Datenträgers, wie z.B. einer CD-ROM, einer DVD, eines USB-Speichersticks oder einer Speicherkarte verkörpert sein. Ebenso kann das Computerprogrammprodukt als ein über eine drahtgebundene oder drahtlose Leitung ladbares Signal vorliegen.

Gemäß einem dritten Aspekt wird ein Verfahren zum Trainieren eines als Autoencoder ausgebildeten künstlichen neuronalen Netzes zur Verwendung in einem wie oben beschriebenen Verfahren vorgeschlagen. Bei diesem Verfahren wird eine Vielzahl an Trainingsdatensätzen bereitgestellt, wobei jeder der Trainingsdatensätze jeweilige Messwerte der Vielzahl von Sensoren aus einem vorhergehenden Betrieb des technischen Systems umfasst. In einem nächsten Schritt werden die Trainingsdatensätze an einer Schnittstelle empfangen. Anschließend wird das als Autoencoder ausgebildete künstliche neuronale Netz mit den Trainingsdatensätzen trainiert. Als Trainingsdatensätze werden ausschließlich einen bestimmungsgemäßen Zustand des technischen Systems beschreibende Datensätze verarbeitet. Die Datensätze umfassen jeweils die Vielzahl der von mehreren Sensoren erfassten Messwerte zu einem bestimmten Zeitpunkt.

Zweckmäßigerweise umfasst eine Klasse ein Cluster mit den Ausgangswerten eines bestimmungsgemäßen Zustands des technischen Systems, wobei die Ausgangswerte Werte einer Encodingschicht des Autoencoders sind.

In einer weiteren zweckmäßigen Ausgestaltung ist vorgesehen, dass die Dimension der Ausgabewerte geringer als die Dimension der Vielzahl an Messwerten ist, die der Eingabeschicht des neuronalen Netzes für das Training zugeführt werden. Auf diese Weise kann eine Reduktion der durch Messung anfallenden Daten erzielt werden.

Es wird gemäß einem vierten Aspekt ein Computerprogrammprodukt vorgeschlagen, das direkt in den internen Speicher eines digitalen Computers geladen werden kann und Softwarecodeabschnitte umfasst, mit denen die Schritte des Trainingsverfahrens ausgeführt werden, wenn das Produkt auf dem Computer läuft. Das Computerprogrammprodukt kann in der Gestalt eines physikalischen Datenträgers, wie z.B. einer CD-ROM, einer DVD, einem USB-Speicherstick oder einer Speicherkarte vorliegen. Ebenso kann das Computerprogrammprodukt als ein über eine drahtgebundene oder drahtlose Leitung ladbares Signal vorliegen.

Gemäß einem fünften Aspekt wird die Verwendung eines als Autoencoder ausgebildeten und trainierten künstlichen neuronalen Netzes für die rechnergestützte vorausschauende Instandhaltung eines technischen Systems vorgeschlagen.

Gemäß einem sechsten Aspekt wird eine Vorrichtung zur rechnergestützten vorausschauenden Instandhaltung eines technischen Systems vorgeschlagen, das mit einer Vielzahl von Sensoren zur Erfassung von jeweiligen Messwerten des technischen Systems versehen ist. Die Vorrichtung umfasst eine Schnittstelle, die dazu ausgebildet ist, jeweilige Messwerte von der Vielzahl an Sensoren des technischen Systems zu empfangen, und eine Recheneinheit, die dazu ausgebildet ist, die Messwerte zu verarbeiten, indem diese einer Eingabeschicht eines als Autoencoder ausgebildeten und trainierten künstlichen neuronalen Netzes zugeführt werden, das in einer Encodingschicht ermittelte Werte als Ausgangswerte bereitstellt, und die weiter dazu ausgebildet ist, zu ermitteln, ob die Ausgangswerte in oder außerhalb einer durch das Training des neuronalen Netzes bestimmten Klasse liegen, wobei auf einen möglichen Instandhaltungsbedarf geschlossen wird, wenn die Ausgangswerte außerhalb der Klasse liegen.

Die erfindungsgemäße Vorrichtung weist die gleichen Vorteile auf, wie diese vorstehend in Verbindung mit dem erfindungsgemäßen Verfahren zur rechnergestützten vorausschauenden Instandhaltung eines technischen Systems beschrieben wurden.

Die Erfindung wird nachfolgend näher anhand eines Ausführungsbeispiels in der Zeichnung erläutert. Es zeigen:
- Fig. 1: einen Zeitstrahl, der die Ereignisse eines herkömmlichen Monitorings eines technischen Systems illustriert;
- Fig. 2: einen Zeitstrahl, der die Ereignisse beim erfindungsgemäßen Verfahren zur vorausschauenden Instandhaltung eines technischen Systems illustriert;
- Fig. 3: eine schematische Darstellung eines Computersystems zur Ausführung der erfindungsgemäßen Verfahren;
- Fig. 4: ein Schema, das das Prinzip von Autoencodern verdeutlicht;
- Fig. 5: einen Ablaufplan, der das Verfahren zur vorausschauenden Instandhaltung eines technischen Systems illustriert; und
- Fig. 6: einen Ablaufplan, der die Schritte eines Verfahrens zum Trainieren eines Autoencoders illustriert.

Vorausschauende Instandhaltung, auch als "Predictive Maintenance" bekannt, wird dazu genutzt, Ausfälle oder Fehler eines technischen Systems zu erkennen bevor es zu einem tatsächlichen Fehlerfall kommt. Bei dem technischen System kann es sich um ein beliebiges technisches System handeln, wie z.B. eine Produktionsanlage, ein Förderband, eine Maschine mit verschiedenen Arbeitsstationen und dergleichen. Das technische System kann auch durch eine einzelne Maschine oder Komponente gebildet sein. Je mehr Komponenten ein solches technisches System umfasst, desto komplexer wird die Aufgabe der Fehlerüberwachung, -erkennung und -behebung.

Zur Überwachung und/oder Steuerung des technischen Systems ist diese mit einer Vielzahl von Sensoren zur Erfassung jeweiliger Messwerte des technischen Systems versehen. Als Messwerte können beispielsweise, abhängig von den Komponenten des technischen Systems, Ströme und Spannungen, Drehzahlen und Momente von Motoren, Geschwindigkeiten von Fördereinrichtungen, Bewegungswinkel und -abläufe von Greifern und dergleichen erfasst werden. Darüber hinaus können in der unmittelbaren Umgebung des technischen Systems vorherrschende Umgebungsbedingungen, wie z.B. Temperatur, Luftfeuchtigkeit, und dergleichen erfasst werden. Die Art der von den Sensoren erfassten Messwerte ist in keiner Weise begrenzt. Ebenso können von den Sensoren Parameter eines zu fertigenden Gegenstands erfasst werden, wie z.B. eine Oberflächenbeschaffenheit, geometrische Maße, Materialzusammensetzungen und dergleichen.

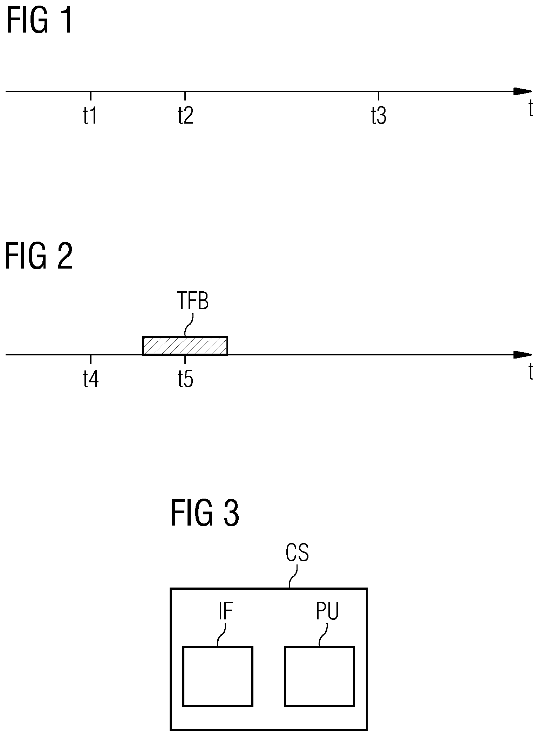

Fig. 1 zeigt einen Zeitstrahl der bei einem herkömmlichen Monitoring eines technischen Systems auftretenden Ereignisse nach der Erkennung eines Fehlers in ihrer zeitlichen Reihenfolge. Zu einem Zeitpunkt t1 tritt ein Fehlerereignis ein. Z.B. weicht eine von einem Sensor gemessene Spannung von einem üblichen Spannungswert ab. Zu einem Zeitpunkt t2 erfolgt eine Fehlererkennung, z.B. durch einen Sensor oder einen Systemadministrator des technischen Systems. Üblicherweise wird der Zeitraum zwischen dem Auftreten des Fehlerereignisses zum Zeitpunkt t1 und der Fehlererkennung zum Zeitpunkt t2 durch eine Systemdiagnose optimiert. Ab der Fehlererkennung zum Zeitpunkt t2 kann dann eine Fehlerbehebung erfolgen, welche zum Zeitpunkt t3 abgeschlossen ist. Abhängig von der Dauer des Zeitraums vom Auftreten des Fehlerereignissen zum Zeitpunkt t1 und der Fehlererkennung zum Zeitpunkt t2, der wesentlich größer sein kann als die Zeitdauer von der Erkennung zum Zeitpunkt t2 bis zur Behebung des Fehlers zum Zeitpunkt t3, kann somit eine lange Zeitspanne vergehen, bis ein auftretendes Problem behoben ist. Um diese Zeitspanne möglichst zu minimieren, wird eine vorausschauende Instandhaltung, d.h. ein vorausschauendes Monitoring des technischen Systems angestrebt.

Der in Fig. 2 dargestellte Zeitstrahl verdeutlicht das dabei angestrebte Vorgehen. Zu einem Zeitpunkt t4 erfolgt eine Fehlervermutung, die sich aus einer Auswertung der von den Sensoren erfassten Messwerten ergibt. Sobald eine Fehlervermutung vorliegt, kann, obwohl noch kein Fehler aufgetreten ist oder sein muss, eine Ursache ermittelt und ggf. eine Fehlerbehebung, z.B. ein prädiktiver Austausch einer Komponente, vorgenommen werden. Der Fehlerbehebungszeitraum ist in Fig. 2 auf dem Zeitstrahl mit TFB gekennzeichnet. Durch das prädiktive Austauschen von Komponenten oder anderen Maßnahmen, um einen vermuteten Fehler zu beheben, kann ein theoretisches Fehlerereignis, das beispielsweise zum Zeitpunkt t5 und damit innerhalb des Fehlerbehebungszeitraums TFB auftreten würde, vermieden werden. Ein Ausfall des technischen Systems oder ein Betrieb des technischen Systems mit verringerter Leistungsfähigkeit kann dadurch mit gewisser Wahrscheinlichkeit vermieden werden.

Das erfindungsgemäße Verfahren ermöglicht eine rechnergestützte vorausschauende Instandhaltung (predictive maintenance) eines technischen Systems. Zur Durchführung des Verfahrens wird ein als Autoencoder ausgebildetes und mit Trainingsdaten trainiertes künstliches neuronales Netz genutzt. Die Verwendung eines Autoencoders weist den Vorteil auf, dass das neuronale Netz nur bestimmungsgemäße Betriebsfälle (sog. "Gut"-Fälle) des technischen Systems lernen muss. Datensätze, die einen bestimmungsgemäßen Betrieb des technischen Systems beschreiben, können problemlos in ausreichender Menge bereitgestellt werden. Abweichungen von dem durch das trainierte neuronale Netz gelernten Gut-Fällen, werden dann von dem Autoencoder erkannt.

Der Autoencoder kann damit als Frühwarnsystem genutzt werden, welcher rechtzeitig darauf hinweist, dass zukünftig Probleme in dem technischen System auftreten könnten. Mittels des Autoencoders ist es somit beispielsweise möglich, zum Zeitpunkt t4 über eine Schnittstelle eine Fehlervermutung auszugeben, welche beispielsweise durch einen, die Analyse vornehmenden Nutzer der technischen Anlage ausgewertet wird. Die Fehlervermutung kann z.B. durch die Ausgabe einer Nachricht oder eines visuell und/oder akustisch wahrnehmbaren Signals über die Schnittstelle erfolgen.

Die Verwendung eines Autoencoders weist den Vorteil auf, dass im Gegensatz zu herkömmlichen neuronalen Netzen oder anderen datengetriebenen Modellen keine Fehlerfälle der technischen Anlage in großer Menge für das Training des Autoencoders bereitgestellt werden müssen. Dies ist in der Praxis auch häufig nicht möglich, da mit zunehmender Komplexität einer technischen Anlage eine Vielzahl unterschiedlicher Fehler auftreten kann, welche in ihrer Häufigkeit für ein Training in zu geringer Anzahl anfallen. Technische Systeme, die in der Vergangenheit fehlerfrei liefen, können somit durch herkömmliche neuronale Netze oder datengetriebene Modelle nicht geprüft werden. Mittels des Autoencoders kann zwar nicht erkannt werden, welcher Fehler in dem technischen System auftreten wird. Es ist jedoch die oft ausreichende Information ermittelbar, dass das technische System auf mögliche und in der Zukunft auftretende Fehler geprüft werden sollte.

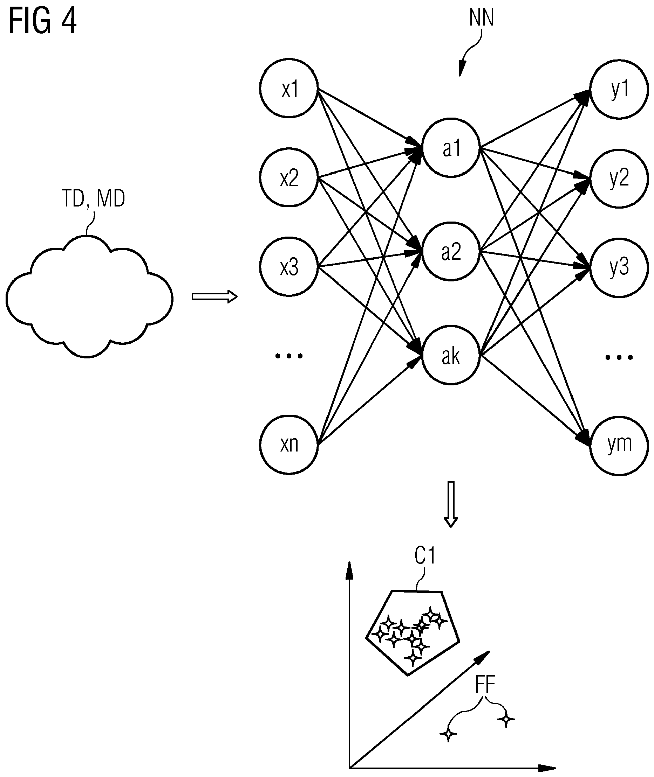

Autoencoder sind aus dem Stand der Technik bekannt und stellen ein künstliches neuronales Netz dar, das dazu genutzt wird, effiziente Codierungen zu lernen. Mittels eines Autoencoders kann eine komprimierte Repräsentation (Encoding) für einen Satz an Eingangsdaten gelernt werden. Damit können wesentliche Merkmale extrahiert werden. Insbesondere ist es möglich, mittels eines Autoencoders die Dimension zu reduzieren. Bekanntermaßen nutzt der Autoencoder drei oder mehr Schichten, wie dies beispielhaft in Fig. 4 dargestellt ist.

Einer Eingabeschicht, die durch Eingangsknoten (Neuronen) x1, ..., xn dargestellt ist, werden Trainingsdaten TD zugeführt. Die Trainingsdaten umfassen in einem jeweiligen Datensatz für einen bestimmten Zeitpunkt Messwerte der Vielzahl von Sensoren. Mit a1, ..., ak sind Neuronen oder Knoten einer Encoding-Schicht dargestellt. Die Anzahl k ist dabei wesentlich geringer als die Anzahl n der Eingangsknoten, wodurch eine Dimensionsreduktion erzielt ist. Mit y1, ..., ym sind Ausgangsknoten (Neuronen) einer Ausgangsschicht dargestellt, wobei jedes Neuron der Ausgangsschicht die gleiche Bedeutung hat wie das entsprechende Neuron in der Eingabeschicht. Dies bedeutet x1 = y1, x2 = y2, ..., xn = ym, wobei n = m ist. Die Knoten oder Neuronen benachbarter Schichten sind in dem gezeigten Ausführungsbeispiel jeweils vollständig miteinander verkoppelt, d.h. jedes Neuron der Eingangsschicht ist mit jedem Neuron der Encodingschicht und jedes Neuron der Encodingschicht ist mit jedem Neuron der Ausgangsschicht verbunden. Dies ist jedoch nicht zwingend.

Entgegen der in Fig. 4 gezeigten Darstellung kann der Autoencoder auch eine Mehrzahl an Encodingschichten umfassen.

Durch das Trainieren des neuronalen Netzwerks ergeben sich in der Encodingschicht Ausgangswerte a1, ..., ak, welche, da die Trainingsdaten TD nur bestimmungsgemäße Zustände des technischen Systems abbilden, sich einem Cluster C1 zuweisen lassen. Wird der trainierte Autoencoder zur vorausschauenden Instandhaltung des technischen Systems genutzt, werden dem Autoencoder anstelle der Trainingsdaten TD Messdaten MD zugeführt. Kommen die Ausgangswerte in dem Cluster C1 zum Liegen, so liegt ein bestimmungsgemäßer Zustand vor. Kommen die Ausgangswerte jedoch außerhalb des durch Training bestimmten Clusters C1 zum Liegen, wie dies in Fig. 4 durch die Fälle FF dargestellt ist, so liegt eine Abweichung vom trainierten Standardfall vor, welcher ein Hinweis darauf sein kann, dass in der Zukunft Probleme in dem technischen System auftreten können oder werden.

Die Durchführung des erfindungsgemäßen Verfahrens erfolgt mittels eines Computersystems CS (Fig. 3), dem an einer Schnittstelle IF die Trainingsdaten TD oder die Messdaten MD zugeführt werden. Die Schnittstelle IF leitet die Trainingsdaten TD oder die Messdaten MD an eine Recheneinheit PU zum Training oder zur Ermittlung der Ausgangswerte weiter. Die Recheneinheit PU implementiert den beschriebenen Autoendcoder.

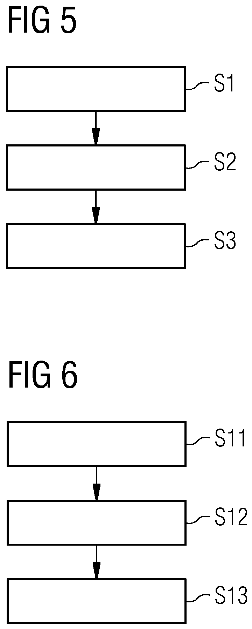

Fig. 5 zeigt einen ersten Ablaufplan mit den Schritten zur Durchführung des erfindungsgemäßen Verfahrens zur rechnergestützten vorausschauenden Instandhaltung eines technischen Systems mit Hilfe eines Autoencoders. In einem Schritt S1 erfolgt der Empfang jeweiliger Messwerte MD von der Vielzahl an Sensoren des technischen Systems an der erwähnten Schnittstelle IF des Computersystems CS. In Schritt S2 erfolgt ein Verarbeiten der Messwerte MD durch die Recheneinheit PU, indem die Messwerte MD einer Eingabeschicht (x1, ..., xn) des als Autoencoder ausgebildeten und mit den Trainingsdaten TD trainierten künstlichen neuronalen Netzes zugeführt werden, wobei der Autoencoder in seiner Encodingschicht (a1, ..., ak) ermittelte Werte als Ausgangswerte bereitstellt. In Schritt S3 wird durch die Recheneinheit PU ermittelt, ob die Ausgangswerte in oder außerhalb einer durch das Training des neuronalen Netzes bestimmten Klasse (Cluster C1) liegen, wobei durch einen Vergleich auf einen möglichen Instandhaltungsbedarf geschlossen wird, wenn die Ausgangswerte außerhalb der bestimmten Klasse (Cluster C1) liegen.

Fig. 6 zeigt einen zweiten Ablaufplan mit den Schritten zum Trainieren des als Autoencoder ausgebildeten künstlichen neuronalen Netzes zur Durchführung des vorab beschriebenen Verfahrens. In Schritt S11 wird eine Vielzahl an Trainingsdatensätzen TD bereitgestellt, wobei jeder der Trainingsdatensätze TD jeweilige Messwerte der Vielzahl von Sensoren aus einem vorhergehenden Betrieb des technischen Systems umfasst. In Schritt S12 werden die Trainingsdatensätze TD an der Schnittstelle IF des Computersystems CS empfangen. In Schritt S13 wird das als Autoencoder ausgebildete künstliche neuronale Netz durch die Recheneinheit PU des Computersystems CS mit den Trainingsdatensätzen TD trainiert. Als Trainingsdatensätze werden dabei in Schritt S11 ausschließlich einem bestimmungsgemäßen Zustand des technischen Systems beschreibende Trainingsdatensätze TD verarbeitet, welche jeweils die Vielzahl von den Sensoren erfassten Messwerte MD zu einem Zeitpunkt umfassen.

### Bezugszeichenliste

- PU: Recheneinheit (PU)
- IF: Schnittstelle (IF)
- PU: Computer
- TD: Trainingsdaten
- MD: Messdaten
- x1,...,xn: Eingangsknoten (Neuronen) einer Eingangsschicht
- a1,..., ak: Knoten (Neuronen) einer Encodingschicht
- y1,...,ym: Ausgangsknoten (Neuronen) einer Ausgangsschicht
- t1: Fehlerereignis
- t2: Fehlererkennung
- t3: Fehlerbehebung
- t4: Fehlervermutung
- t5: theoretisches Fehlerereignis
- TFB: Fehlerbehebungszeitraum
- C1: Cluster
- FF: möglicher Fehler
- S1: Verfahrensschritt
- S2: Verfahrensschritt
- S3: Verfahrensschritt
- S11: Verfahrensschritt
- S12: Verfahrensschritt
- S13: Verfahrensschritt

## Patentansprüche

1. Verfahren zur rechnergestützten vorausschauenden Instandhaltung eines technischen Systems, das mit einer Vielzahl von Sensoren zur Erfassung von jeweiligen Messwerten (MD) des technischen Systems versehen ist, mit den Schritten:
S1) Empfang jeweiliger Messwerte (MD) von der Vielzahl an Sensoren des technischen Systems an einer Schnittstelle (IF);
S2) Verarbeiten der Messwerte (MD) durch eine Recheneinheit (PU), indem die Messwerte (MD) einer Eingabeschicht eines als Autoencoder ausgebildeten und mit Trainingsdaten trainierten künstlichen neuronalen Netzes (NN) zugeführt werden, das in einer Encodingschicht ermittelte Werte als Ausgangswerte bereitstellt;
S3) Ermitteln durch die Recheneinheit (PU), ob die Ausgangswerte in oder außerhalb einer durch das Training des neuronalen Netzes (NN) bestimmten Klasse (C1) liegen, wobei durch einen Vergleich auf einen möglichen Instandhaltungsbedarf geschlossen wird, wenn die Ausgangswerte außerhalb der bestimmten Klasse (C1) liegen.

2. Verfahren nach Anspruch 1, bei dem in Schritt S1) die jeweiligen Messwerte (MD) in vorgegebenen Abständen von der Schnittstelle (IF) empfangen werden.

3. Verfahren nach Anspruch 1 oder 2, bei dem das als Autoencoder ausgebildete neuronale Netz (NN) eine oder mehrere Encodingschichten umfasst, wobei bei mehreren Encodingschichten die Ausgangswerte der Encodingschicht verarbeitet werden, die mit einer Ausgangsschicht des neuronalen Netzes (NN) verkoppelt ist.

4. Verfahren nach einem der vorhergehenden Ansprüche, bei dem die Dimension der Ausgabewerte geringer als die Dimension der Vielzahl an Messwerten (MD) ist, die der Eingabeschicht des neuronalen Netzes (NN) zugeführt werden.

5. Verfahren nach einem der vorhergehenden Ansprüche, bei dem die Ausgabewerte für eine spätere Auswertung und/oder als Trainingsdaten für ein weiteres Training des neuronalen Netzes (NN) gespeichert werden.

6. Computerprogrammprodukt, das direkt in den internen Speicher eines digitalen Computers geladen werden kann und Softwarecodeabschnitte umfasst, mit denen die Schritte gemäß einem der Ansprüche 1 bis 5 ausgeführt werden, wenn das Produkt auf dem Computer läuft.

7. Verfahren zum Trainieren eines als Autoencoder ausgebildeten künstlichen neuronalen Netzes (NN) zur Verwendung in einem Verfahren gemäß einem der vorhergehenden Ansprüche, bei dem
S11) eine Vielzahl an Trainingsdatensätzen bereitgestellt wird, wobei jeder der Trainingsdatensätze jeweilige Messwerte (MD) der Vielzahl von Sensoren aus einem vorhergehenden Betrieb des technischen Systems umfasst;
S12) die Trainingsdatensätze an einer Schnittstelle (IF) empfangen werden;
S13) das als Autoencoder ausgebildete künstliche neuronale Netz (NN) mit den Trainingsdatensätzen trainiert wird;
wobei als Trainingsdatensätze ausschließlich einen bestimmungsgemäßen Zustand des technischen Systems beschreibende Datensätze, die jeweils die Vielzahl der von den Sensoren erfassten Messwerte (MD) zu einem Zeitpunkt umfassen, verarbeitet werden.

8. Verfahren nach Anspruch 7, bei dem eine Klasse (C1) ein Cluster mit den Ausgangswerten eines bestimmungsgemäßen Zustands des technischen Systems umfasst.

9. Verfahren nach Anspruch 7 oder 8, bei dem die Dimension der Ausgabewerte geringer als die Dimension der Vielzahl an Messwerten (MD) ist, die der Eingabeschicht des neuronalen Netzes (NN) für das Training zugeführt werden.

10. Computerprogrammprodukt, das direkt in den internen Speicher eines digitalen Computers geladen werden kann und Softwarecodeabschnitte umfasst, mit denen die Schritte gemäß einem der Ansprüche 7 bis 9 ausgeführt werden, wenn das Produkt auf dem Computer läuft.

11. Verwendung eines als Autoencoder ausgebildeten und trainierten künstlichen neuronalen Netzes (NN) für die rechnergestützte vorausschauende Instandhaltung eines technischen Systems.

12. Vorrichtung zur rechnergestützten vorausschauenden Instandhaltung eines technischen Systems, das mit einer Vielzahl von Sensoren zur Erfassung von jeweiligen Messwerten (MD) des technischen Systems versehen ist, umfassend:
- eine Schnittstelle (IF), die dazu ausgebildet ist, jeweilige Messwerte (MD) von der Vielzahl an Sensoren des technischen Systems zu empfangen;
- eine Recheneinheit (PU), die dazu ausgebildet ist,
die Messwerte (MD) zu verarbeiten, indem diese einer Eingabeschicht eines als Autoencoder ausgebildeten und trainierten künstlichen neuronalen Netzes (NN) zugeführt werden, das in einer Encodingschicht ermittelte Werte als Ausgangswerte bereitstellt, und
zu ermitteln, ob die Ausgangswerte in oder außerhalb einer durch das Training des neuronalen Netzes (NN) bestimmten Klasse (C1) liegen, wobei auf einen möglichen Instandhaltungsbedarf geschlossen wird, wenn die Ausgangswerte außerhalb der Klasse (C1) liegen.
